# EUROPÄISCHE PATENTSCHRIFT

(11) **EP 2 388 066 B1**
(45) Veröffentlichungstag und Bekanntmachung des Hinweises auf die Patenterteilung: **09.01.2013**
(21) Anmeldenummer: 11159204.4
(22) Anmeldetag: 22.03.2011
(51) Int. Cl.: B01F 5/06, C12C 3/08, C12C 7/20, C12C 7/28, C12C 13/00, B01F 5/02

(54) **Vorrichtung und Verfahren zum Zugeben von Hopfen**
Method and device for adding hops
Dispositif et procédé destinés à l'alimentation en houblon

(30) Priorität: 19.05.2010 DE 102010029124
(43) Veröffentlichungstag der Anmeldung: 23.11.2011
(73) Patentinhaber: Krones AG, 93073 Neutraubling (DE)
(72) Erfinder: Gruber, Robert, 84072, Abens/Gemeinde Au (DE)
(74) Vertreter: Grünecker, Kinkeldey, Stockmair & Schwanhäusser

(56) Entgegenhaltungen:
- DE-A1- 2 228 497
- DE-A1- 2 438 392
- DE-A1- 19 619 289
- GB-A- 1 035 621

## Beschreibung

Die Erfindung bezieht sich auf eine Vorrichtung zum Zugeben von Hopfen der im Oberbegriff von Anspruch 1 erläuterten Art sowie ein Verfahren dafür.

Eine derartige Vorrichtung ist aus der DE 196 19 289 A1 bekannt. Die für die Bierherstellung notwendige Hopfengabe wird in der Regel der Heißwürze zugegeben. Dies kann vor bzw. während des Aufheizens der Würze auf Kochtemperatur erfolgen oder auch während des Würzekochens oder während des Heißhalten der Würze. Das Kochen der Würze bezweckt neben der Sterilisation der Würze, der Inaktivierung von Enzymen, der Verdampfung von überschüssigem Wasser auch vorwiegend das Lösen und die Isomerisation von Hopfeninhaltsstoffen.

In der DE 22 28 497 A1 und der GB 1 035 621 A werden Vorrichtungen zum Extrahieren von Hopfen mit Bienrvürze in einem Hopfenbehälter beschrieben. In der DE 24 38 392 A1 wird allgemein ein statischer Mischer für strömende Gase oder Flüssigkeiten beschrieben.

Hopfen wird heutzutage meist in Form von Extrakten oder Pellets zugegeben. Zu diesem Zweck enthält die bekannte Vorrichtung einen oder mehrere Hopfenlösebehälter, die über einen Würzekreislauf mit einem Sudgefäß, beispielsweise einer Würzepfanne oder einem Vorlaufgefäß verbunden sind. Die Hopfenprodukte werden in diesen Hopfenlösebehältern vorgelegt und dann während des Brauprozesses mit Würze durchspült. Da mehrere Hopfenlösebehälter vorgesehen sind, können mehrere Hopfengaben mit verschiedenen Mengen, verschiedensten Produkten und zu unterschiedlichen Zeitpunkten verarbeitet werden. Die Würze strömt in die Hopfenlösebehälter von unten her oder seitlich ein und löst die Hopfenbestandteile. Der Auslauf, durch den die mit Hopfen vermischte Würze bzw. die in der Würze gelösten Hopfenbestandteile wieder in die Würzepfanne geleitet werden, befindet sich im oberen Bereich des Hopfenlösebehälters.Zur Entleerung wird der Zulauf der Hopfenlösebehälter für die Restentleerung mit verwendet.

Je nach Größe des Hopfenlösebehälters kann nur eine bestimmte Menge an Hopfen (Pellets und/oder Extrakt) aufgenommen werden. Da die Hopfengabemenge aber sorten- oder jahrgangsbedingt stark schwanken kann, müssen ausreichende Reserven vorgesehen werden. Sollte jedoch der Hopfenlösebehälter mit Hopfen überladen werden, so kann dieser nicht mehr richtig gelöst werden, was wiederum zu Störungen führen kann. Bei hoher Überladung kann es sogar zur Blockierung der nachfolgenden Rohrleitungen kommen, was wiederum Produktionsunterbrechungen bedeuten kann.

Weiterhin ist Hopfen ein sehr teuerer Rohstoff, und die Ausbeute bis zum fertigen Bier beträgt nur etwa 28% bis 35%. Aus diesen Gründen ist eine bestmögliche Lösung der Hopfenbestandteile äußerst wünschenswert. Weiterhin sollte eine möglichst kurze Lösezeit eingehalten werden. Hiedurch wird der Produktionsablauf und/oder das Bieraroma positiv beeinflusst.

Der Erfindung liegt somit die Aufgabe zugrunde, eine Vorrichtung zur Hopfenzugabe zu schaffen, mit der die Lösung des Hopfens im Hopfenlösebehälter verbessert und/oder beschleunigt wird.

Die Aufgabe wird durch die im Anspruch 1 angegebenen Merkmale gelöst.

Durch den erfindungsgemäßen Einsatz eines statischen Mischers können die Lösebedingungen des Hopfens bzw. der Hopfenprodukte in der Würze sanft aber nachhaltig verbessert werden.

Bei dem erfindungsgemäß eingesetzten statischen Mischer ist es möglich, eine gute Mischung und optimale Lösung der Hopfenprodukte in der Würze zu erreichen, ohne dass die Mischung einer zu starken mechanischen Belastung oder einer zu starken Rotation ausgesetzt wird, die zu einer Fest/Flüssig-Entmischung führen könnte.

Vorteilhafte Weiterbildungen der Erfindung sind den Unteransprüchen zu entnehmen.

Der statische Mischer verursacht bevorzugt eine Erhöhung der Fließgeschwindigkeit mit Hilfe einer Querschnittsverengung.

Der statische Mischer ist mit einer Querschnittsverengung versehen, die so ausgebildet ist, dass sie eine Erhöhung der Fließgeschwindigkeit verursacht. Der Mischer ist mit einer Leiteinrichtung versehen, die so ausgebildet ist, dass sie eine Rotation einer Flüssigkeitssäule im Hopfenlösebehälter verursacht. Bevorzugt sind beide Maßnahmen gemeinsam vorgesehen.

Die Anordnung des Mischers an der Einmündung der Würzeleitung stellt sicher, dass der gesamte Flüssigkeitssäule des Hopfenlösebehälters zum Mischen zur Verfügung steht.

Durch die Verwendung eines Pralltellers kann gleichzeitig verhindert werden, dass schwerkraftbedingt feste Bestandteile aus dem Hopfenlösebehälter in die Würzeleitung hineingelangen und durch aufquellen zu Störungen führen.

Bevorzugt ist der Fließquerschnitt der Querschnittsverengung so ausgebildet, dass eine Fließgeschwindigkeit von ≥ 0,5 m/s, bevorzugt von 0,8 bis 1,5 m/s erreicht wird.

Der Mischer ist weiterhin für eine langsame bis moderate Rotationsgeschwindigkeit der Flüssigkeitssäule im Hopfenlösebehälter ausgelegt, die von einer langsamen Geschwindigkeit von weniger als einer Umdrehung pro Minute bis etwa 30 U/mim reicht, wobei Rotationsströmungen zwischen 10 bis 30 U/min bevorzugt sind, wobei der speziell bevorzugte Bereich bei 15 bis 20 U/min liegt.

Ein Ausführungsbeispiel der Erfindung wird nachfolgend anhand der Zeichnungen näher erläutert. Es zeigen:
- Figur 1: eine schematische Darstellung einer erfindungsgemäßen Vorrichtung zum Zugeben von Hopfen,
- Figur 2: die vergrößerte Einzelheit "A" aus Figur 1, und
- Figur 3: eine schematische, perspektivische Darstellung des erfindungsgemäß verwendeten statischen Mischers.

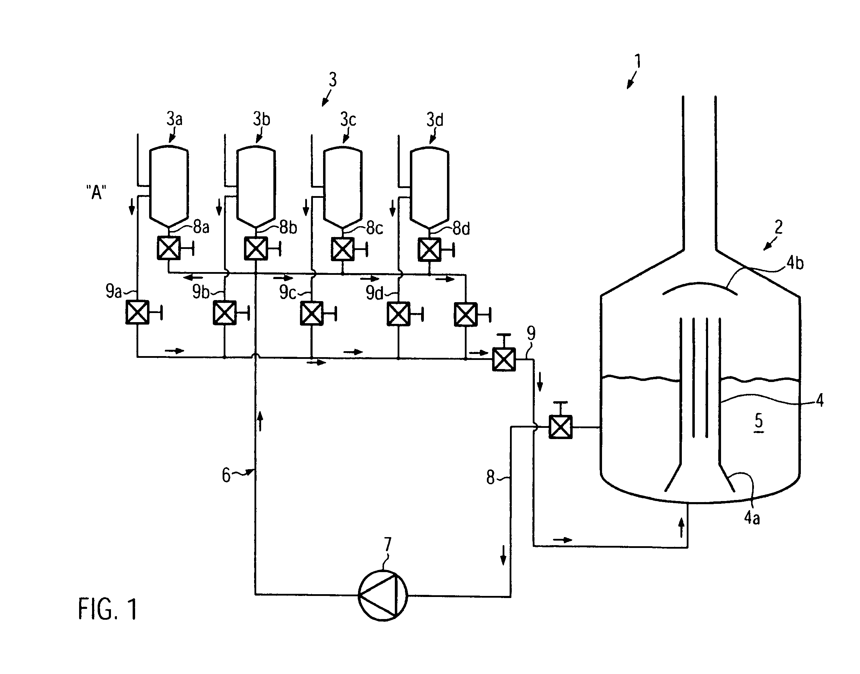

Figur 1 zeigt in stark schematisierter Darstellung eine Vorrichtung 1 zur Bierbereitung, wie sie bis auf die erfindungsgemäßen Einzelheiten aus der DE 196 19 289 A1 bekannt ist, so dass auf diese Druckschrift verwiesen werden kann. Die Vorrichtung 1 enthält einen Würzebehälter 2 in Form einer sogenannten Würzepfanne 2 und eine Vielzahl von Hopfenlösebehältern 3. Der Würzebehälter ist als Beispiel einer Würzepfanne 2 mit einem Innenkocher dargestellt. In dessen Inneren ein röhrenförmiger Wärmtauscher 4 angeordnet ist, der an seinem unteren Ende 4a thermisch Würze ansaugt, diese erwärmt und dann gegen einen Prallteller 4b leitet, der die Würze zurück in den Würzevorrat 5 im Behälter 2 leitet. Die Hopfenlösebehälter 3 sind über einen Würzekreislauf 6 mit dem Würzebehälter 2 verbunden. Der Würzekreislauf 6 enthält eine Pumpe 7, eine Zulaufleitung 8 und eine Rücklaufleitung 9. Die Pumpe 7 zieht Würze über die Zulaufleitung 8 aus dem Würzebehälter 2 ab und leitet sie über geeignete Verteiler in Abzweigungen 8a, 8b, 8c, 8d der Zulaufleitung 8 in jeweils einen Hopfenlösebehälter 3a, 3b, 3c und 3d. Der Würzekreislauf 6 enthält weiterhin Abzweigungen 9a, 9b, 9c, 9d der Rücklaufleitung 9, die Würze aus jedem der Würzebehälter 3a, 3b, 3c und 3d über die gemeinsame Rücklaufleitung 9 zurück in den Würzebehälter 2 leiten. Im Würzekreislauf 6 sind verschiedene Ventile bzw. Absperrorgane vorgesehen, die dem Fachmann geläufig und für die Erfindung nicht wesentlich sind.

Je nach Aufstellung der Hopfenlösebehälter kann die Zirkulationspumpe 7 vor oder nach den Hopfenlösebehältern angeordnet sein. Auch wenn hier nur vier Hopfenlösebehälter gezeigt werden ist die Erfindung nicht auf diese Anzahl beschränkt.

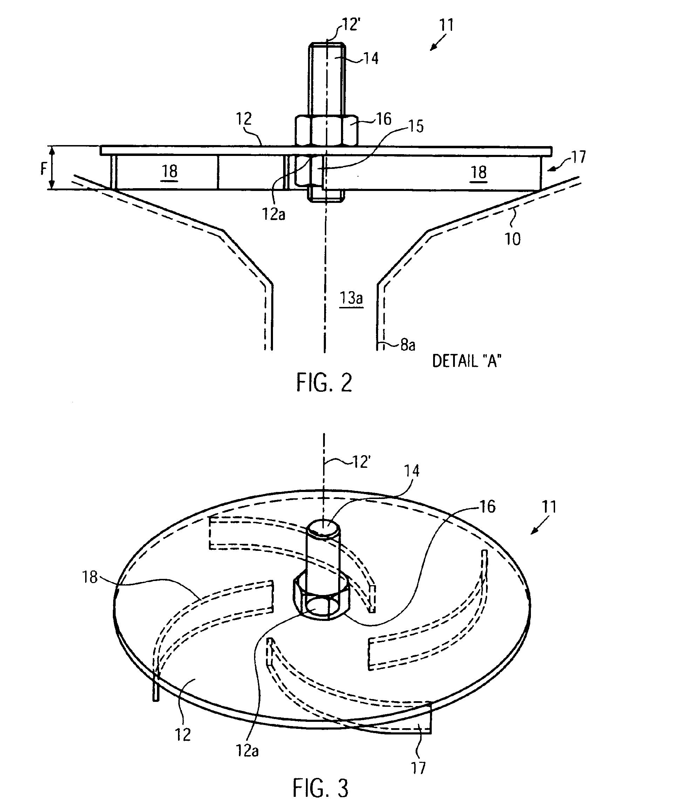

Die Zuläufe 8a bis 8d weisen eine Einmündung 13 im unteren Bereich des Hopfenlösebehälters 3, bevorzugt an der tiefsten Stelle eines Bodens 10, der trichterförmig oder nach außen gekrümmt oder auch gerade sein kann, auf. In der Nähe der Einmündung 13 durch den Boden 10 ist in jedem der Hopfenlösebehälter 3a bis 3d ein statischer Mischer 11 vorgesehen (Fig. 2). Der Boden 10, der statische Mischer 11 und die Einmündung 13 sind für alle Hopfenlösebehälter 3 gleich und sollen hier stellvertretend nur anhand des ersten Hopfenlösebehälters 3a beschrieben werden.

Wie auch in Verbindung mit Figur 3 gezeigt, enthält der statische Mischer 11 einen Prallteller 12, der über nicht gezeigte Montagelemente frei hängend und im Wesentlichen horizontal über der Einmündung 13a der Zulaufleitung 8a angeordnet ist. Der Prallteller 12 kann beispielsweise von derjenigen Art sein, wie sie bisher eingesetzt wurden, um zu verhindern, dass Feststoffe in den Zulauf 8 gelangen. Erfindungsgemäß ist der Prallteller 12 jedoch so bemessen (größerer Durchmesser) bzw. angeordnet, dass er mit dem, hier trichterförmigen, Behälterboden 10 einen, bevorzugt ringförmigen Fließspalt F begrenzt. Der Fließspalt F ist so definiert, dass er für eine Erhöhung der Fließgeschwindigkeit sorgt und die über den Zulauf 8 einfließende Würze in eine gerichtete Strömung entlang des Bodens 10 und der bevorzugt zylindrischen Behälterwände der Hopfenlösebehälter 3 zwingt. Der Fließquerschnitt des Fließspaltes F sollte so bemessen werden, dass eine Fließgeschwindigkeit von ≥ 0,5 m/s, und bevorzugt zwischen 0,8 bis 1,5 m/s erreicht wird. Der Fließspalt F ist bevorzugt als Ringspalt mit einer im Wesentlichen konstanten Breite ausgebildet.

Der Fließquerschnitt des Fließspaltes F ist bevorzugt einstellbar, im dargestellten Ausführungsbeispiel über eine Verstellung seiner Höhe. Die Einstellung erfolgt auf einfachste Weise mit Hilfe eines Bolzens 14, auf dem die Prallplatte 12 mit Hilfe einer mittigen Öffnung 12a, axial zum Gewindebolzen 14 verstellbar, sitzt. Der Bolzen 14 ist in geeigneter, nicht dargestellter Weise mit dem Trägerteil des Mischers verbunden. Die Prallplatte 12 liegt auf einer axial bezüglich des Bolzens 14 verstellbaren Unterlage 15, die im dargestellten Ausführungsbeispiel als Mutter ausgebildet ist, die auf dem Bolzen 14 unter Mitnahme der Prallplatte 12 in beide Richtungen verschraubt werden kann, so dass die Prallplatte 12 sich weiter vom Behälterboden 10 entfernt bzw. näher an diesen herangelangt, so dass der Fließspalt F vergrößert oder verkleinert werden kann. Eine Arretiereinrichtung 16 hält die Prallplatte 12 auf der gewählten Spaltbreite fest. Die Arretiereinrichtung 16 ist hier als Kontermutter ausgebildet.

Der statische Mischer 11 enthält weiterhin eine Leiteinrichtung 17, die in der Lage ist, die durch die Einmündungsöffnung 13 einströmende Würze in eine Rotationsströmung zu zwingen. Die Leiteinrichtung enthält bevorzugt wenigstens ein Leitblech 18, das in Richtung auf die Einmündung 13 von der Unterseite des Pralltellers 12 absteht. Das Leitblech 18 kann den trichterförmigen Boden 10 berühren und so eine Mindestbreite des Fließspaltes F definieren. Mindestens ein Teil des Leitbleches 18 weist eine Ausrichtung auf, die zwischen der Radialen und der Tangentialen zur Mittellinie 12' des Pralltellers 12 verläuft. Bevorzugt ist das Leitblech 18 schaufelartig gekrümmt und spiralig um die Mittelachse 12' angeordnet. Das Leitblech ist im Wesentlichen streifenförmig, mit einer seiner langen Seiten am Prallteller 12 befestigt und erstreckt sich vom Umfang des Pralltellers 12, das heißt vom Fließspalt F bis in die Nähe der Öffnung 12a im Prallteller 12. Bevorzugt sind mehrere, mit Abstand um die Mittellinie 12' verteilt angeordnete Leitbleche 18 vorgesehen. Es sind auch andere geometrische Formen, wie zum Beispiel Trapezform oder gerade Leitbleche denkbar.

Die Leitbleche 18 sind so ausgebildet, dass sie für eine Rotationsströmung der Flüssigkeitssäule im Hopfenlösebehälter 3 sorgen, die von weniger als einer U/min bis etwa 30 U/min reichen kann. Bevorzugt sollte die Rotationsströmung im Bereich zwischen 10 bis 30 U/min, und insbesondere bevorzugt zwischen 15 bis 20 U/min betragen. Die Rotation der Flüssigkeitssäule im Hopfenbehälter sollte bevorzugt so eingestellt werden, dass sie weder zu gering (kaum Verbesserung im Löseverhalten des Hopfens in der Würze) noch zu hoch (Gefahren einer gravitationsbedingten Fest/Flüssig-Trennung) ist.

Im Betrieb wird die Würze über die Pumpe 7 im Kreislauf 6, 8, 9 umgepumpt. Über die eingestellte Breite (Fließquerschnitt) des Fließspaltes F und die umgepumpte Menge wird eine definierte Eintrittsgeschwindigkeit der Flüssigkeit in den Hopfenlösebehälter 3 erreicht. Durch die Leiteinrichtung 17 und die Konstruktion der Leitbleche 18 wird die zuströmende Flüssigkeit bzw. die bereits im Hopfenlösebehälter 3 enthaltene Flüssigkeit in Rotation versetzt. Durch die Rotation und die höhere Fließgeschwindigkeit wird die im Hopfenlösebehälter eingelagerte Hopfenmenge optimal mit Würze durchmischt und gelöst. Eine Klumpenbildung wird verhindert und der Abtransport der gelösten Hopfenbestandteile wird verbessert. Die zu lösende Hopfengabemenge kann erhöht und die Lösezeit für die Hopfengabe minimiert werden. Die Flexibilität hinsichtlich der Hopfenprodukte (zum Beispiel Pellet Typ 90, Pellet Typ 45, unterschiedliche Hopfenextrakte oder Hopfenprodukte mit unterschiedlichem α-Säuregehalte) kann gesteigert werden.

Der erfindungsgemäße statische Mischer kann nicht nur in neu zu erstellende Vorrichtungen eingebaut werden, sondern kann auch zur Nachrüstung geliefert werden. Bei Nachrüstungen können die Schüttmengen der vorhandenen Hopfenlösebehälter erhöht oder, bei gleicher Menge, die Lösezeiten verringert werden.

In Abwandlung des beschriebenen und gezeichneten Ausführungsbeispiels kann die Konstruktion des statischen Mischers, beispielsweise in Anpassung an verschiedene Formen von Hopfenlösebehältern, geändert werden. Die Leiteinrichtung muss nicht unbedingt die beschriebenen Leitbleche aufweisen, auch gerade Leitbleche oder Formteile sind denkbar, wenn sie die gewünschte Rotation der Flüssigkeit im Hopfenlösebehälter bewirken. Auch die Verstelleinrichtung kann entweder entfallen oder durch andere, bekannte technische Maßnahmen ersetzt werden.

## Patentansprüche

1. Vorrichtung (1) zum Zugeben von Hopfen bei der Bierbereitung, mit einem Hopfenlösebehälter (3), in den eine Würzeleitung (8) einmündet, **dadurch gekennzeichnet, dass** dem Hopfenlösebehälter (3) ein statischer Mischer (11) zum Erzeugen einer gerichteten Strömung zugeordnet ist.

2. Vorrichtung nach Anspruch 1, **dadurch gekennzeichnet, dass** der Mischer (11) eine eine Erhöhung der Fließgeschwindigkeit verursachende Querschnittsverengung (F) enthält.

3. Vorrichtung nach Anspruch 1 oder 2, **dadurch gekennzeichnet, dass** der Mischer (11) eine Leiteinrichtung (17) zum Erzeugen einer Rotation einer Flüssigkeitssäule im Hopfenlösebehälter (3) enthält.

4. Vorrichtung nach einem der Ansprüche 1 bis 3, **dadurch gekennzeichnet, dass** der Mischer (11) an der Einmündung (13) der Würzeleitung (8a) angeordnet ist.

5. Vorrichtung nach einem der Ansprüche 1 bis 4, **dadurch gekennzeichnet, dass** der Mischer (11) einen sich über die Einmündung (13) der Würzeleitung (8a) erstreckenden Prallteller (12) enthält.

6. Vorrichtung nach Anspruch 5, **dadurch gekennzeichnet, dass** sich die Einmündung (13) durch einen Boden (10) des Hopfenlösebehälters (3) erstreckt und der Prallteller (12) mit dem Boden (10) die Querschnittsverengung (F) bildet.

7. Vorrichtung nach einem der Ansprüche 2 bis 6, **dadurch gekennzeichnet, dass** die Querschnittsverengung (F) einen einstellbaren Fließquerschnitt aufweist.

8. Vorrichtung nach einem der Ansprüche 2 bis 7, **dadurch gekennzeichnet, dass** die Querschnittsverengung (F) als Ringspalt ausgebildet ist.

9. Vorrichtung nach einem der Ansprüche 2 bis 8, **dadurch gekennzeichnet, dass** die Querschnittsverengung (F) für eine Fließgeschwindigkeit von ≥ 0,5 m/s, bevorzugt 0,8 bis 1,5 m/s ausgebildet ist.

10. Vorrichtung nach einem der Ansprüche 1 bis 9, **dadurch gekennzeichnet, dass** der Mischer (11) wenigstens ein Leitblech (18) aufweist.

11. Vorrichtung nach Anspruch 10, **dadurch gekennzeichnet, dass** eine Vielzahl von Leitblechen (18) vorgesehen sind.

12. Vorrichtung nach Anspruch 10 oder 11, **dadurch gekennzeichnet, dass** das Leitblech (18) am Prallteller (12) angeordnet ist.

13. Vorrichtung nach einem der Ansprüche 10 bis 12, **dadurch gekennzeichnet, dass** das Leitblech (18) gerade oder gekrümmt ist.

14. Vorrichtung nach einem der Ansprüche 1 bis 13, **dadurch gekennzeichnet, dass** der Mischer (11) für eine Geschwindigkeit der Rotationsströmung von weniger als einer U/min bis 30 U/min, bevorzugt zwischen 10 bis 30 U/min und insbesondere bevorzugt zwischen 15 bis 20 U/min, der Würzesäule im Hopfenlösebehälter (3) ausgebildet ist.

15. Statischer Mischer für eine Vorrichtung nach einem der Ansprüche 1 bis 14, mit einem Prallteller (12) und vom Prallteller (12) abstehenden Leitblechen (18).

16. Verfahren zum Zugeben von Hopfen bei der Bierbereitung, wobei der Hopfen und die Würze in einen Hopfenlösebehälter (3) eingebracht werden, **dadurch gekennzeichnet, dass** im Hopfenlösebehälter (3) statisch gemischt wird.

## Claims

1. Apparatus (1) for adding hops during the production of beer, having a hop dissolving tank (3), into which a wort pipe (8) discharges, **characterised in that** a static mixer (11) is assigned to the hop dissolving tank (3) to generate a directed flow.

2. Apparatus according to Claim 1, **characterised in that** the mixer (11) contains a cross section narrowing (F) which causes an increase in the flow rate.

3. Apparatus according to Claim 1 or 2, **characterised in that** the mixer (11) contains a guide mechanism (17) for producing a rotation of a liquid column in the hop dissolving tank (3).

4. Apparatus according to any one of Claims 1 to 3, **characterised in that** the mixer (11) is arranged at the discharge opening (13) of the wort pipe (8a).

5. Apparatus according to any one of Claims 1 to 4, **characterised in that** the mixer (11) contains a baffle plate (12) extending across the discharge opening (13) of the wort pipe (8a).

6. Apparatus according to Claim 5, **characterised in that** the discharge opening (13) extends through a bottom (10) of the hop dissolving tank (3) and the baffle plate (12) forms the cross section narrowing (F) with the bottom (10).

7. Apparatus according to any one of Claims 2 to 6, **characterised in that** the cross section narrowing (F) has an adjustable flow cross section.

8. Apparatus according to any one of Claims 2 to 7, **characterised in that** the cross section narrowing (F) is designed as an annular gap.

9. Apparatus according to any one of Claims 2 to 8, **characterised in that** the cross section narrowing (F) is designed for a flow rate of ≥ 0.5 m/s, preferably 0.8 to 1.5 m/s.

10. Apparatus according to any one of Claims 1 to 9, **characterised in that** the mixer (11) has at least one deflector (18).

11. Apparatus according to Claim 10, **characterised in that** a plurality of deflectors (18) is provided.

12. Apparatus according to Claim 10 to 11, **characterised in that** the deflector (18) is arranged on the baffle plate (12).

13. Apparatus according to any one of Claims 10 to 12, **characterised in that** the deflector (18) is straight or curved.

14. Apparatus according to any one of Claims 1 to 13, **characterised in that** the mixer (11) is designed for a rate of rotational flow of less than one rpm to 30 rpm, preferably between 10 and 30 rpm and particularly preferably between 15 and 20 rpm, of the wort column in the hop dissolving tank (3).

15. Static mixer for an apparatus according to any one of Claims 1 to 14, having a baffle plate (12) and deflectors (18) protruding from the baffle plate (12).

16. Method for adding hops during the production of beer, wherein the hops and the wort are introduced into a hop dissolving tank (3), **characterised in that** the contents of the hop dissolving tank (3) are statically mixed.

## Revendications

1. Dispositif (1) pour l'adjonction de houblon lors de la préparation de bière, avec un récipient de dissolution de houblon (3) dans lequel débouche une conduite de moût (8), **caractérisé en ce qu'**un mélangeur statique (11) destiné à produire un écoulement orienté est associé au récipient de dissolution de houblon (3).

2. Dispositif selon la revendication 1, **caractérisé en ce que** le mélangeur (11) présente une réduction de section (F) qui provoque un accroissement de la vitesse d'écoulement.

3. Dispositif selon la revendication 1 ou 2, **caractérisé en ce que** le mélangeur (11) contient un dispositif de guidage (17) pour produire une rotation d'une colonne de liquide dans le récipient de dissolution de houblon (3).

4. Dispositif selon l'une des revendications 1 à 3, **caractérisé en ce que** le mélangeur (11) est disposé au niveau de l'embranchement (13) de la conduite de moût (8a).

5. Dispositif selon l'une des revendications 1 à 4, **caractérisé en ce que** le mélangeur (11) contient un déflecteur (12) qui s'étend au-dessus de l'embranchement (13) de la conduite de moût (8a).

6. Dispositif selon la revendication 5, **caractérisé en ce que** l'embranchement (13) traverse un fond (10) du récipient de dissolution de houblon (3), et le déflecteur (12) forme avec le fond (10) la réduction de section (F).

7. Dispositif selon l'une des revendications 2 à 6, **caractérisé en ce que** la réduction de section (F) présente une section d'écoulement réglable.

8. Dispositif selon l'une des revendications 2 à 7, **caractérisé en ce que** la réduction de section (F) est conçue comme un passage annulaire.

9. Dispositif selon l'une des revendications 2 à 8, **caractérisé en ce que** la réduction de section (F) est conçue pour une vitesse d'écoulement ≥ 0,5 m/s, de préférence de 0,8 à 1,5 m/s.

10. Dispositif selon l'une des revendications 1 à 9, **caractérisé en ce que** le mélangeur (11) comporte au moins une chicane (18).

11. Dispositif selon la revendication 10, **caractérisé en ce qu'**il est prévu plusieurs chicanes (18).

12. Dispositif selon la revendication 10 ou 11, **caractérisé en ce que** la chicane (18) est disposée sur le déflecteur (12).

13. Dispositif selon l'une des revendications 10 à 12, **caractérisé en ce que** la chicane (18) est droite ou courbe.

14. Dispositif selon l'une des revendications 1 à 13, **caractérisé en ce que** le mélangeur (11) est conçu pour une vitesse d'écoulement rotatif de la colonne de moût dans le récipient de dissolution de houblon (3) qui va de moins de 1 tr/min à 30 tr/min, et située de préférence entre 10 et 30 tr/min et plus spécialement entre 15 et 20 tr/min.

15. Mélangeur statique pour un dispositif selon l'une des revendications 1 à 14, avec un déflecteur (12) et des chicanes (18) qui partent du déflecteur (12).

16. Procédé pour l'adjonction de houblon lors de la préparation de bière, étant précisé que le houblon et le moût sont amenés dans un récipient de dissolution de houblon (3), **caractérisé en ce que** le mélange dans le récipient de dissolution de houblon (3) se fait de manière statique.
